# EUROPEAN PATENT SPECIFICATION

(11) **EP 0 455 299 B1**
(45) Date of publication and mention of the grant of the patent: **08.06.1994**
(21) Application number: 91200998.2
(22) Date of filing: 25.04.1991
(51) Int. Cl.: F16D 55/226

(54) **Vibration-damping support bracket for floating calipers**
Schwingungsdämpfende Tragkonsole für Schwimmsattel
Support amortisseur de vibrations pour étriers flottants

(30) Priority: 30.04.1990 IT 2017190
(43) Date of publication of application: 06.11.1991
(73) Proprietor: FIAT AUTO S.p.A., 10135 Torino (IT)
(72) Inventor: Poncini, Gianfranco, I-10126 Turin (IT)
(74) Representative: Fusina, Gerolamo

(56) References cited:
- DE-A- 3 612 355
- DE-A- 3 613 346
- GB-A- 1 130 549

## Description

This invention relates to a vibration-damping support bracket for floating calipers, particularly for eliminating braking noise. DE-A-3 613 346 relates to a disc brake support partially damped, having a fixing frame which extends from one side of disk brake and comprises two arms which are connected by a crossmember. The disc brakes of currently produced automobiles, and in particular the front brakes, have a known tendency to produce monochromatic noise in a frequency range of between 1500 and 12000-13000 Hertz.

These noises known typically as brake whistle are typically produced at low temperature (80-150°C) and low pressure (5-25 bar), ie during light deceleration braking.

This noise has always been a problem in the servicing of a new model, in that even though there are no safety or running comfort implications, the whistle is unpleasant and annoying for the driver and can also lead to false estimation of the state of wear of the brake friction linings.

This noise is generally due to the intrinsic vibration frequencies of one or more parts of the braking system.

The object of the present invention is to eliminate braking noise where caused by floating brake calipers, by damping the intrinsic frequencies of the caliper.

This object is attained by a floating caliper support bracket as claimed in claim 1.

According to the invention said layer of damping material consists of a metal base element and a covering of fibrous material. Furthermore, said weight and said damping layer can be fixed by gluing.

In a further embodiment of this invention said mass consists of a plurality of elements and relative layers of damping material. The technical characteristics and further advantages of the present invention will be more apparent from the following description given by way of non-limiting example with reference to the accompanying drawings in which:

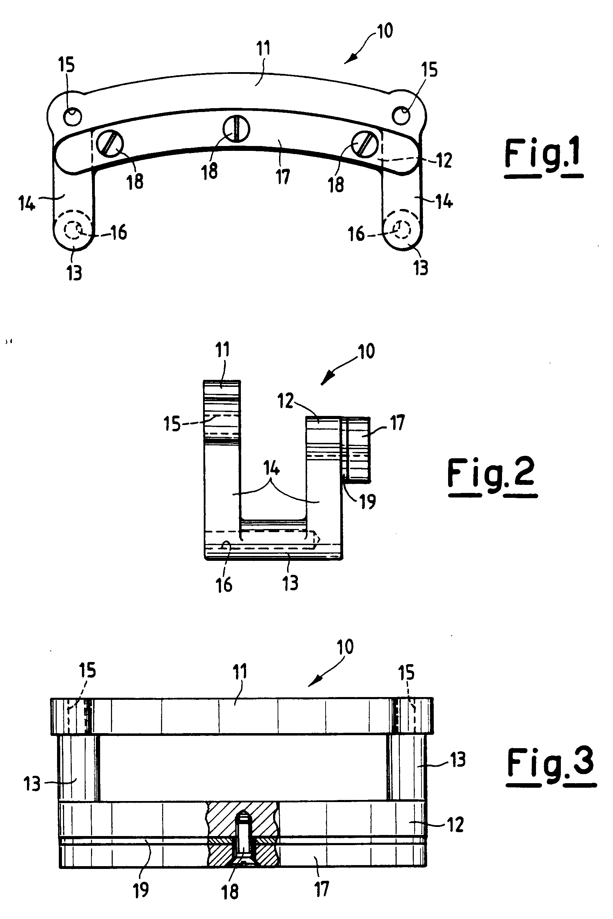

Figure 1 is an elevational view of the support bracket according to the invention,
Figure 2 is an elevational side view of the bracket of Figure 1, and
Figure 3 is a plan view of the bracket of Figure 1.

In the figures the reference numeral 10 indicates overall a floating caliper bracket consisting of a pair of U-shaped elements 11 and 12 having different dimensions and being connected together by a cross-member 13.

Specifically, the cross-members 13 connect together the free ends 14 of the elements 11 and 12.

In the first element 11 there are provided first holes 15 for fixing the bracket and second holes 16 for fixing a floating caliper (not shown).

The second element 12, dimensionally smaller than the first element 11, is provided at its top with a weight 17 fixed by screws 18, a layer of damping material 19 being interposed between the weight 17 and the second element 12.

Generally the weight 17 is a metal weight and can also be fixed by gluing.

The layer of damping material consists of a metal base element provided with a fibrous covering.

As an alternative to the single weight and single layer of damping material 19, several layers and several weights can be provided.

## Claims

1. A floating caliper support bracket (10) consisting essentially of a pair of U-shaped elements (11,12) in which the free ends (14) of arms of said elements (11,12) are connected together by a pair of crossmembers (13), the first (11) of said U-shaped elements (11,12) comprising fixing holes (15) in its upper end for said bracket and fixing holes (16) in its lower end for said floating caliper, characterised in that the second (12) of said U-shaped elements (11,12) is of smaller dimensions than said first (11) of said elements (11,12) and carries a weight (17) fixed to its upper end, a layer of damping material (19) being provided between said second U-shaped element (12) and said weight (17).

2. A support bracket (10) as claimed in claim 1, characterised in that said layer of damping material (19) consists of a metal base element and a covering of fibrous material.

3. A support bracket (10) as claimed in claim 1, characterised in that said weight (17) and said damping layer (19) can be fixed by gluing.

4. A support bracket (10) as claimed in claim 1, characterised in that said weight (17) consists of a plurality of elements and relative layers of damping material (19).

## Revendications

1. Support (10) pour étriers flottants, constitué essentiellement d'une paire d'éléments en forme de U (11, 12), dans lequel les extrémités libres (14) des branches de ces éléments (11, 12) sont reliées par une paire d'éléments transversaux (13), le premier (11) des éléments en forme de U (11, 12) comprenant des trous de fixation (15) ménagés dans son extrémité supérieure et destinés au support et des trous de fixation (16) ménagés dans son extrémité inférieure et destinés à l'étrier flottant, caractérisé en ce que le second (12) des éléments en forme de U (11, 12) est de dimensions inférieures à celles du premier (11) des éléments en forme de U (11, 12) et porte un poids (17) fixé à son extrémité supérieure, une couche de matériau amortisseur (19) étant prévue entre le second élément en forme de U (12) et le poids (17).

2. Support (10) selon la revendication 1, caractérisé en ce que la couche de matériau amortisseur (19) est constitué d'un élément de base métallique et d'un revêtement en matériau fibreux.

3. Support (10) selon la revendication 1, caractérisé en ce que le poids (17) et la couche d'amortissement (19) peuvent être fixés par collage.

4. Support (10) selon la revendication 1, caractérisé en ce que le poids (17) est constitué d'une pluralité d'éléments et de couches de matériau amortisseur (19) associées.

## Patentansprüche

1. Auflagerbock mit Schwimmsattel (10), welcher im wesentlichen aus einem Paar U-förmiger Elemente (11, 12) besteht, bei dem die freien Enden (14) der Arme dieser Elemente (11, 12) durch ein Paar Querträger (13) miteinander verbunden sind, wobei das erste (11) dieser U-förmigen Elemente (11, 12) in seinem oberen Ende Befestigungslöcher (15) für diesen Auflagerbock sowie in seinem unteren Ende Befestigungslöcher (16) für den Schwimmsattel umfaßt, dadurch gekennzeichnet, daß das zweite (12) der U-förmigen Elemente (11, 12) kleinere Abmessungen aufweist als das erste (11) dieser Elemente (11, 12) und ein an seinem oberen Ende angebrachtes Gewicht (17) trägt, wobei eine Schicht aus Dämpfungsmaterial (19) zwischen dem zweiten U-förmigen Element (12) und dem Gewicht (17) vorhanden ist.

2. Auflagerbock (10) nach Anspruch 1, dadurch gekennzeichnet, daß die Schicht aus Dämpfungsmaterial (19) einen Metallteil und eine Abdeckung aus faserigem Werkstoff umfaßt.

3. Auflagerbock (10) nach Anspruch 1, dadurch gekennzeichnet, daß das Gewicht (17) und die Schicht aus Dämpfungsmaterial (19) durch Verkleben angebracht werden können.

4. Auflagerbock (10) nach Anspruch 1, dadurch gekennzeichnet, daß das Gewicht (17) eine Vielzahl an Elementen sowie relative Schichten aus Dämpfungsmaterial (19) umfaßt.
